# EUROPÄISCHE PATENTSCHRIFT

(11) **EP 2 751 794 B1**
(45) Veröffentlichungstag und Bekanntmachung des Hinweises auf die Patenterteilung: **16.08.2017**
(21) Anmeldenummer: 11779355.4
(22) Anmeldetag: 30.09.2011
(51) Int. Cl.: G08B 13/24, G08B 13/196

(54) **BEWERTUNG DER SICHERHEITSLAGE VON AUFENTHALTSBEREICHEN IN GEBÄUDEN MIT ZUGANGSBERECHTIGUNG MITTELS KAMERAS UND RFID-LESEGERÄTEN**
EVALUATION OF THE SECURITY SITUATION OF LOCATION AREAS IN BUILDINGS WITH ACCESS AUTHORISATION BY MEANS OF CAMERAS AND RFID READING DEVICES
ÉVALUATION DE LA SITUATION EN MATIÈRE DE SÉCURITÉ DE ZONES DE SÉJOUR DANS DES BÂTIMENTS AVEC DROIT D'ACCÈS AU MOYEN DE CAMÉRAS ET DE LECTEURS RFID

(30) Priorität: 01.09.2011 EP 11179781
(43) Veröffentlichungstag der Anmeldung: 09.07.2014
(73) Patentinhaber: Siemens Schweiz AG, 8047 Zürich (CH)
(72) Erfinder: KONRAD, Hilmar, 6340 Baar (CH); WIESER, Dieter, 8700 Küsnacht (CH)
(74) Vertreter: Maier, Daniel Oliver
(86) Internationale Anmeldenummer: PCT/EP2011/067199
(87) Internationale Veröffentlichungsnummer: WO 2013/029694

(56) Entgegenhaltungen:
- WO-A1-2004/068432
- GB-A- 2 476 869
- JP-A- 2003 132 468
- US-A1- 2003 197 612
- US-A1- 2007 257 985

## Beschreibung

Die Erfindung betrifft ein Verfahren zur Bewertung der Sicherheitslage in einem Gebäude, wobei das Gebäude Aufenthaltsbereiche mit Zugangsberechtigung für berechtigte Personen wie z.B. Büroräume, Forschungs- und Entwicklungsabteilungen, Verbindungsbereiche wie Flure, Treppenhäuser und Aufzüge sowie Ein- und Ausgänge aufweist. Ein solches Gebäude kann mehrere Etagen mit überwachungsbedürftigen Aufenthaltsbereichen aufweisen. Weiterhin betrifft die Erfindung ein zu Verfahren korrespondierendes System sowie geeignete Anwendungen des erfindungsgemässen Verfahrens.

Aus dem Stand der Technik sind allgemein Verfahren und Systeme zur Gebäudesicherung bekannt, bei welchen die Anwesenheit, das heisst die Präsenz von Personen, z.B. mittels Bewegungsmelder oder mittels Kameras mit nachgeschalteter Bildverarbeitung ermittelt wird.

Weiterhin sind Identifikationsverfahren mit berührungslos arbeitenden Kennungen bekannt. Derartige Kennungen sind z.B. elektronische Ausweise oder "Badges" mit integrierten RFID-Transpondern. Letztere können durch entsprechende RFID-Lesegeräte ausgelesen und an eine Zentrale zur Sicherheitsüberprüfung auf Zugangsberechtigung weitergeleitet werden.

Aus der DE 10 2007 001 225 A1 ist ferner ein sensitiver Fussboden bekannt, der eine Vielzahl von rasterförmig verlegten Flächenverkleidungselementen aufweist, die ihrerseits mehrere Sensorflächen aufweisen. Die Sensorflächen sind sensitiv auf Druck und zugleich sensitiv auf die Anwesenheit eines elektrisch polarisierbaren Körpers, wie z.B. eines Schuhs, in unmittelbarer Nähe zum Flächenverkleidungselement. Durch Auswerten der jeweiligen Sensorsignale ist die Anzahl von Personen sowie deren Bewegungsrichtung in einem entsprechenden Fussbodenbereich ermittelbar. Die Dokumente US2003/0197612 und GB 2476869 beschreiben Systeme zur Überwachung von Aufenthaltsbereichen mit Hilfe der Kombination aus Kameras und RFID-Lesegeräten.

Ausgehend von dem eingangs genannten Stand der Technik ist es eine Aufgabe der Erfindung, ein erweitertes Verfahren und ein erweitertes System zur Bewertung der Sicherheitslage in einem Gebäude mit Aufenthaltsbereichen mit Zugangsberechtigung anzugeben.

Es ist eine weitere Aufgabe der Erfindung, geeignete Vorrichtungen und Anwendungen des erfindungsgemässen Verfahrens anzugeben.

Die Aufgabe der Erfindung wird durch die Gegenstände der unabhängigen Ansprüche gelöst. Vorteilhafte Verfahrensvarianten und Ausführungsformen der vorliegenden Erfindung sind in den abhängigen Ansprüchen angegeben.

Die Aufgabe wird durch ein Verfahren zur Bewertung der Sicherheitslage in einem Gebäude gelöst, wobei das Gebäude Aufenthaltsbereiche mit Zugangsberechtigung für entsprechend berechtigte Personen aufweist. Es wird jeweils eine (blosse) aktuelle Anzahl physisch anwesender Personen mittels Kameras mit nachgeschalteter Bildverarbeitung automatisiert ermittelt, wobei die Kameras im Decken- und/oder Wandbereich der Aufenthaltsbereiche verteilt angeordnet sind. Es wird jeweils eine aktuelle Anzahl von Identifikationskennungen ermittelt, welche mittels RFID-Lesegeräten von RFID-Transpondern ausgelesen werden, wobei die Identifikationskennungen bestimmungsgemäss von berechtigten Personen mitgeführt werden. Die RFID-Lesegeräte sind im Decken- und/ oder Wandbereich der Aufenthaltsbereiche verteilt angeordnet. Es wird schliesslich auf Basis der jeweiligen beiden Anzahlen ein Indikator zur Bewertung der aktuellen Sicherheitslage im Gebäude ermittelt und ausgegeben.

Durch die gleichzeitige Erfassung der physischen Anwesenheit von Personen sowie deren Identifikation ist vorteilhaft die Anwesenheit von nichtausgewiesenen Personen oder von Personen mit nicht gültiger Identifikationskennung sowie deren Standort im Gebäude detektierbar und nachverfolgbar. Dabei sind keine gesonderten Zugangsbarrieren wie Drehkreuze, Schleusen und dergleichen mehr erforderlich. Vielmehr ist durch eine nachverfolgende gleichzeitige Erfassung der Personenanwesenheit und ggf. deren Identifikation ein Annähern einer mittels des RFID-Transponders nicht ausgewiesenen Person oder einer Person mit als ungültig erkannten Identifikationskennung an einen Aufenthaltsbereich mit Zugangsberechtigung detektierbar. In einem solchen Fall kann z.B. Sicherheitspersonal an diesen Aufenthaltsbereich mit Zugangsberechtigung hinbeordert werden. Selbiges ist der Fall, wenn eine an sich berechtigte Person mit Zugangsberechtigung für einen Grossteil der Aufenthaltsberechtigung sich einem Aufenthaltsbereich mit besonderer Zugangsberechtigung nähert, für welche diese Person keine gültige Identifikationskennung für den Zugang aufweist.

Die Aufenthaltsbereiche mit Zugangsberechtigung sind insbesondere Büroräume, Forschungs- und Entwicklungsabteilungen, Verbindungsbereiche wie Flure, Treppenhäuser und Aufzüge sowie Ein- und Ausgänge des Gebäudes. Es ist prinzipiell keine durchgehende flächenmässige Überwachung bzw. ein durchgehendes Nachverfolgen der physischen Anwesenheitserfassung der Personen sowie eine durchgehende flächenmässige Erfassung der Identifikationskennungen erforderlich. Es können z.B. auch reine Verbindungsgänge, Treppenhäuser oder Betriebsräume ohne zusätzliche weitere Ein- und Ausgänge ausgespart bleiben. Selbiges trifft auf Aufenthaltsbereiche zu, die generell keine Zugangsberechtigung erfordern, wie z.B. Foyers, Kantinen oder Warteräume. Somit kann ein Gebäude sich flickenteppichartig aus Aufenthaltsbereichen mit Zugangsberechtigung und Aufenthaltsbereichen ohne erforderliche Zugangsberechtigung zusammensetzen. Auch ist es vorstellbar, dass bei den Aufenthaltsbereichen mit Zugangsberechtigung nur die Identifikationskennungen erfasst werden.

Vorteilhaft ist es besonders, wenn die Aufenthaltsbereiche ohne Zugangsberechtigung zumindest teilweise nur auf die Anwesenheit von Personen und ggf. auf deren Weiterbewegung hin überwacht werden. Dadurch kann sozusagen eine auf physische Anwesenheit erfasste und nachverfolgte Person mit zugeordneter erfasster gültiger Identifikationskennung durch einen Aufenthaltsbereich ohne Zugangsberechtigung mit alleiniger Überwachung auf physischer Anwesenheit hindurch an einen weiteren Aufenthaltsbereich mit Zugangsberechtigung weitergereicht werden. Vorzugsweise wird übergeordnet, wie z.B. etagenweise oder bereichsweise, die Anzahl aller physisch erfassbaren Personen fortlaufend ermittelt. Selbiges gilt für die fortlaufende Ermittlung der Anzahl aller kontaktlos auslesbaren Identifikationskennungen von den RFID-Transpondern.

Mit Sicherheitslage ist in erster Linie der Gefährdungsgrad von Unternehmen, öffentlichen Einrichtungen sowie von Personen oder Personengruppen durch unbefugte Personen gemeint mit dem möglichen Ziel, in den Besitz von vertraulichen oder geheimen Dokumenten, von Unterlagen oder elektronischen Dokumenten und Daten zu gelangen.

Mit der Erfassung der "blossen" aktuellen Anzahl physisch anwesender Personen ist lediglich die Erfassung der ganzzahligen Anzahl von Personen gemeint. Insbesondere ist mit der Erfassung mittels der Kameras kein biometrisches Verfahren gemeint, welches Rückschlüsse auf die Identität der jeweiligen Personen ermöglicht bzw. ermöglichen könnte.

Die Kamera kann z.B. eine herkömmliche, im für den Menschen optisch sichtbaren Bereich sensitive CCD- oder MOS-Kamera mit einer vergleichsweise schlechten optischen Auflösung sein. Die Auflösung kann dabei so gewählt sein bzw. "künstlich" in der nachgeschalteten Bildverarbeitung so verschlechtert bzw. verpixelt werden, dass kein Rückschluss auf die Identität der erfassten Person mehr möglich ist.

Mit RFID-Transponder sind passive und insbesondere aktive RFID-Transponder gemeint. Aktive RFID-Transponder senden eine jeweilige im Transponder elektronisch gespeicherte Identifikationskennung (ID) durch Aussenden von elektromagnetischen Wellen aus. Vorzugsweise senden die aktiven RFID-Transponder in einem ISM-Frequenzband, insbesondere im UHF-Frequenzbereich, d.h. im Mikrowellenbereich mit Frequenzen von 300 MHz bis 3 GHz. Bei den passiven RFID-Transpondern kann es sich um induktiv gekoppelt auslesbare RFID-Transponder, wie z.B. im Frequenzbereich von 13,56 MHz, oder um passive UHF-Transponder handeln, welche lediglich die Impedanz der Transponderantenne mit der Identifikationskennung modulieren, ohne selbst elektromagnetische Wellen auszusenden.

RFID-Transponder können z.B. in einem Ausweis im Chipkartenformat, in einem Schlüssel, in einem Etikett oder in einer Armbanduhr, in einem Etui, in einer Tasche oder dergleichen integriert sein.

Mit Indikator ist vorzugsweise ein Zahlenwert gemeint, dessen numerischer Wert ein Mass für die vorliegende, bewertete Sicherheitslage ist. Der Zahlenwert 0 kann z.B. die Sicherheitslage in einem Gebäude mit "ungefährdet" oder "sicher" anzeigen. Steigende Zahlenwerte können z.B. einen steigenden Gefährdungsgrad der Sicherheitslage anzeigen. Der Indikator kann auch eine sich ändernde Farbe sein, wie z.B. grün für keine Gefährdung, rot für hohe Gefährdung, sowie gelb oder orange für dazwischen liegende Gefährdungsstufen. Er kann auch eine Folge von sich je nach Gefährdungsgrad ändernden Symbolen sein, wie z.B. ein Gefahrenzeichen oder ein "OK"-Symbol. Er kann auch eine Buchstabenfolge oder eine Folge unterschiedlicher akustischer Signale sein.

Typischerweise stimmen der Standort einer physisch erfassten Person sowie der Standort eines von der Person mitgeführten, ausgelesenen RFID-Transponders zumindest in etwa überein. Erst für den Fall, dass die Anzahl der physisch erfassten Personen nicht mit der Anzahl der erfassten, ausgelesenen RFID-Transponder übereinstimmt, wird ein geänderter Indikator ausgegeben, welcher eine Verschlechterung der Sicherheitslage anzeigt. Dies ist z.B. dann der Fall, wenn eine Person, wie z.B. ein Besucher, keinen RFID-Transponder oder einen RFID-Transponder mit ungültiger Identifikationskennung mit sich führt. Selbiges ist der Fall, wenn z.B. ein RFID-Transponder liegen geblieben ist. Auch hier stimmt die Zahl der physisch erfassten Personen nicht mit der Anzahl von erfassten Identifikationskennungen überein. Die Änderung dieser Sicherheitslage kann gleichfalls durch einen geänderten Indikator ausgegeben werden.

Nach einer Verfahrensvariante wird übergeordnet eine aktuelle Gesamtpersonenanzahl und eine aktuelle Gesamtidentifikationskennungsanzahl ermittelt. Dadurch ist eine flächenmässig weitergehende Bewertung der Sicherheitslage vorteilhaft möglich. Diese kann z.B. mehrere oder sämtliche Stockwerke in einem Gebäude und/oder mehrere zusammengehörende Gebäude eines Hauptgebäudes oder Gebäudekomplexes sein.

Einer weiteren Verfahrensvariante zufolge wird als Indikator für die Sicherheitslage fortlaufend die Differenz zwischen den beiden Anzahlen und/oder zwischen den beiden Gesamtanzahlen ermittelt. Gegebenenfalls wird eine Meldung oder eine Warnung ausgegeben, wenn die jeweilige Differenz einen vorgegebenen Vergleichswert übersteigt.

Die Differenz kann dabei positive oder negative Werte annehmen, je nachdem, ob die Personenanzahl grösser oder kleiner ist als die Anzahl der Identifikationskennungen, wobei der Fall, dass die Personenanzahl grösser ist als die Anzahl der Identifikationskennungen hinsichtlich der Sicherheit als kritischer einzuschätzen ist. Im einfachsten Fall wird nur der Betrag der jeweiligen Differenz gebildet.

Der Vergleichswert kann z.B. den Wert 0, 1, 2 oder 3 aufweisen. Die Meldung oder Warnung kann z.B. eine Email oder eine Textmeldung, wie z.B. eine SMS, oder eine Pagermitteilung sein. Die jeweilige Differenz ist dabei ein Mass für die Abweichung von den mittels der Kamera erfassten Personen zu den erfassten Identifikationskennungen. Dabei kann der Indikator mit zunehmender Abweichung bzw. Differenz einen zunehmenden Zahlenwert aufweisen, welcher eine zunehmende Verschlechterung der Sicherheitslage repräsentiert. Die Differenz aus der aktuellen Gesamtpersonenanzahl und der aktuellen Gesamtidentifikationskennungsanzahl gibt hierbei einen Gesamtüberblick über die Sicherheitslage an, die durchaus von einer "lokalen" Differenz aus der aktuellen Personenanzahl und der aktuellen Identifikationskennungsanzahl in einem der Aufenthaltsbereiche unterschiedlich sein kann.

Nach einer weiteren Verfahrensvariante wird eine weitere Meldung ausgegeben, wenn die Anzahl der als ungültig erkannten Identifikationskennungen einen vorgegebenen weiteren Vergleichswert übersteigt. Der Vergleichswert kann z.B. den Wert 0, 1, 2 oder 3 aufweisen. In diesem Fall ist zwar eine Identifikationskennung aus einem RFID-Transponder auslesbar, den eine Person mitgeführt. Allerdings stellt eine als ungültig erkannte Identifikationskennung, wie z.B. nach Abgleich mit einem übergeordneten Leitstellenrechner, ein Gefährdungspotential für die Sicherheitslage im Gebäude dar. Die ungültige Identifikationskennung kann z.B. von einem ehemaligen Mitarbeiter stammen, der z.B. zu einem Mitbewerber gewechselt ist und dem folglich keinerlei Zugangsberechtigungen mehr zustehen.

Einer weiteren Verfahrensvariante wird bzw. werden der jeweilige Standort der physisch anwesenden Personen und/oder der jeweilige Standort der ausgelesenen RFID-Transponder ermittelt und ausgegeben. Die Ausgabe kann z.B. auf einem grafisch nachgebildeten Flurplan des Gebäudes visualisiert werden. Dadurch sind Standortdiskrepanzen zwischen dem Standort physisch anwesender Personen und dem jeweiligen Standort erfasster Identifikationskennungen unmittelbar erkennbar. Visuelle Bewegungen von physisch anwesend erfassten und als solche gekennzeichneten Personen, losgelöst von den Bewegungen erfasster Identifikationskennungen, sind somit ein Indiz für das Vorliegen einer Sicherheitsverletzung bzw. für das Vorliegen einer Verschlechterung der Sicherheitslage. Selbiges trifft zu, wenn visuelle Bewegungen von erfassten und als solche gekennzeichnete Identifikationskennungen losgelöst von den Bewegungen erfasster physisch anwesender Personen sind.

Ein weiterer Vorteil ist, dass auf Basis dieser Standortinformationen eine gezielte Evakuierung des Gebäudes in einem gemeldeten Brandfall möglich ist. Mit anderen Worten ist eine priorisierte Evakuierung von Aufenthaltsbereichen mit hoher Personendichte durch die angeforderten Einsatzkräfte möglich.

Nach einer vorteilhaften Verfahrensvariante wird als Kamera zumindest teilweise eine Infrarot-Kamera, insbesondere eine Wärmebildkamera, verwendet.

Die Infrarot-Kamera ist vorzugsweise ein sogenanntes Thermopile-Array wie z.B. mit einer Auflösung 32x31 Pixeln, 64x62 Pixeln oder noch höherer Auflösung. Derartige Thermopile-Arrays sind z.B. von der Fa. Heimann Sensor GmbH aus Deutschland erhältlich. Alternativ kann die Infrarot-Kamera ein Bolometer-Array mit gleicher, ähnlicher oder höherer Auflösung sein. Derartige Mikrobolometer-Arrays sind z.B. von der Fa. FLIR Systems aus den USA erhältlich.

Der Vorteil bei beiden technologischen Varianten liegt darin, dass keine Kühlung der integrierten Komponenten erforderlich ist. Der Wärmedetektionsbereich liegt typischerweise im Bereich von etwa 7,5 µm bis 15 µm. Ein weiterer Vorteil ist, dass eine visuelle Erfassung im für den Menschen optisch sichtbaren Bereich nicht möglich ist. Mit anderen Worten ist mittels rechnergestützter Bildverarbeitung der Wärmebilder keine direkte Identifizierung von Personen im Sinne eines "Privacy"-Schutzes möglich. Wesentlich ist, dass das Auflösungsvermögen der Infrarot-Kameras, welche an einer Decke angeordnet ist und auf den gegenüberliegenden Fussboden ausgerichtet ist, besser als 20 cm ist. Vorzugsweise liegt die Auflösung in Bezug auf den Fussboden zwischen 5 und 20 cm.

Der Wärmebildsensor einer solchen Infrarot-Kamera kann z.B. auch ein Siliziumsensor sein, der in einem Wellenlängenbereich von 1 bis 2 µm sensitiv ist. Er kann für den Wellenlängenbereich von 3 bis 5 µm ein Indium-Gallium-Arsenid-Sensor oder Bleisulfid-Sensor sein. Er kann für einen Wellenlängenbereich von 1 bis 5 µm auch ein Indium-Antimon-Detektor oder Cadmium-Quecksilber-Tellurid-Detektor sein. Er kann schliesslich für den Wellenlängenbereich von 8 bis 14 µm auch ein Gallium-Arsenid-Quantentopf-Detektor sein.

Die Infrarot-Kameras sind vorzugsweise entlang des zu überwachenden Aufenthaltsbereichs beabstandet zueinander verlegt. Dabei ist vorzugsweise ein Maximalabstand zwischen benachbarten Infrarot-Kameras einzuhalten, so dass eine angrenzende oder überlappende wärmeoptische Erfassung des Aufenthaltsbereichs noch gegeben ist. Der Abstand zwischen zwei Infrarot-Kameras kann zwischen 3 und 10 Metern liegen. Abhängig von der Deckenhöhe kann dieser Abstandswert auch darunter liegen, wie z.B. bei 2 Metern bei niedriger Deckenhöhe, oder darüber liegen, wie z.B. bei 15 oder 20 Metern bei hoher Deckenhöhe, wie z.B. in einer Halle.

Das erfindungsgemässe Verfahren ist zudem vorteilhaft zum Detektieren und Lokalisieren von Personen mit fehlender, nicht auslesbarer oder ungültiger Identifikationskennung anwendbar.

Die Aufgabe der Erfindung wird zudem durch eine Baueinheit aus einer Kamera und aus einem RFID-Lesegerät gelöst, wobei die Kamera und das RFID-Lesegerät in einem gemeinsamen Gehäuse aufgenommen sind. Es versteht sich von selbst, dass das Gehäuse einer solchen Baueinheit sowohl für Licht für die Kamera als auch für die zu empfangenden und gegebenenfalls zu sendenden Funkwellen zum Auslesen von RFID-Transpondern durchlässig sein muss. Das Gehäuse kann z.B. aus Glas oder Kunststoff bestehen.

Die Kamera ist weiterhin zur automatisierten Ermittlung und Ausgabe einer (blossen) aktuellen Anzahl physisch anwesender Personen in einem optischen Erfassungsbereich der Kamera eingerichtet. Sie ist alternativ oder zusätzlich zur Erfassung und Ausgabe entsprechender Bilddaten an einer ersten Datenschnittstelle der Baueinheit eingerichtet. Die erste Datenschnittstelle kann z.B. eine Klemme oder eine Buchse zum Anschliessen eines Datenkabels sein. Sie kann auch eine Funkdatenschnittstelle sein, wie z.B. eine WLAN-Funkschnittstelle.

Das RFID-Lesegerät ist ferner zum Auslesen von Identifikationskennungen aus RFID-Transpondern in einem Funkerfassungsbereich des RFID-Lesegeräts eingerichtet. Vorzugsweise ist das RFID-Lesegerät zumindest zum Empfang im UHF-Bereich, insbesondere in einem ISM-Frequenzbereich um 2,45 GHz oder um 5 GHz eingerichtet. Vorzugsweise handelt es sich bei den RFID-Transpondern 4 um aktive UHF-RFID-Transponder. Alternativ kann das UHF-RFID-Lesegerät ein Backscatter-Lesegerät sein. In diesem Fall können passive Backscatter-UHF-RFID-Transponder, die selbst nicht aktiv senden, durch ein Funkabfragefeld des Backscatter-Lesegeräts ausgelesen werden.

Das RFID-Lesegerät kann alternativ oder zusätzlich zum Bestimmen einer aktuellen Anzahl von erfassten Identifikationskennungen und zur Ausgabe der erfassten Identifikationskennungen und/oder der aktuellen Anzahl der Identifikationskennungen an einer zweiten Datenschnittstelle der Baueinheit eingerichtet sein. Vorzugsweise sind die erste und zweite Datenschnittstelle als eine gemeinsame Datenschnittstelle realisiert.

Einer weiteren Ausführungsform zufolge ist die Kamera wiederum eine Infrarot-Kamera, insbesondere eine Wärmebildkamera.

Nach einer besonders vorteilhaften Ausführungsform ist zumindest ein Teil des im Blickfeld der Infrarot-Kamera liegenden Gehäuses oder ein als optische Linse ausgebildetes Gehäuseteil derart beschaffen, dass dieses im Infrarotbereich zumindest weitgehend transparent und im optisch sichtbaren Bereich undurchsichtig, insbesondere opak ist. Zugleich ist der zumindest eine Teil des im Blickfeld der Infrarot-Kamera liegenden Gehäuses oder das als optische Linse ausgebildetes Gehäuseteil vorzugsweise zugleich durchlässig für Empfangs- und/oder Sendefunkwellen des RFID-Lesegeräts. Für den Fall einer schwenkbaren Infrarot- bzw. Wärmebildkamera ist das zumindest eine Gehäuseteil entsprechend grösser zu dimensionieren.

Der Werkstoff des zumindest einen Gehäuseteils kann z.B. ein transparenter Kunststoff, insbesondere ein Polymer sein, in welchem Streupartikel eingebracht sind, oder der eine Strukturierung aufweist, die sichtbares Licht zerstreut und das infrarote Licht zum Grossenteil passieren lässt. Er kann alternativ auch ein Glas oder eine Keramik sein. Mit "sichtbarem Licht" ist der für den Menschen optisch wahrnehmbare Lichtwellenlängenbereich von etwa 380 nm bis 780 nm gemeint. Dabei sind insbesondere der Volumenanteil und die Grössenverteilung der Streupartikel im Werkstoff so bestimmt, dass die Streupartikel das sichtbare Licht zerstreuen und das infrarote Licht zum Grossenteil passieren lassen. Vorzugsweise liegt die Grössenverteilung der Streupartikel im Bereich der Wellenlänge des infraroten Lichts, das heisst im Bereich von 7,5 µm bis 20 µm. Ein derartiges Gehäuse bzw. ein derartiger Gehäusebereich lässt sich z.B. aus Polyethylen herstellen, in welche UV-stabilisierte TiO₂- oder ZnO-Partikel eingebracht sind. Es sind auch andere geeignete Partikel bekannt, wie z.B. Industrie-Diamant.

Alternativ oder zusätzlich kann zumindest ein Teil der Oberfläche des im Blickfeld der Infrarot- bzw. Wärmebildkamera liegenden Gehäuses oder das als optische Linse ausgebildete Gehäuseteil eine derartige Strukturierung aufweisen, dass diese das sichtbare Licht zerstreut und das infrarote Licht zum Grossenteil passieren lässt. Die Strukturierung weist vorzugsweise Strukturbreiten im Bereich der Wellenlänge des Infrarotlichts auf, das heisst Strukturbreiten im Bereich von 7,5 µm bis 20 µm. Die Strukturen können z.B. Punktierungen oder Linien sein. Eine solche Strukturierung kann z.B. durch Ätzen, feinstes Bürsten oder Elektronenpolieren der Linsenoberfläche oder Gehäuseteiloberfläche erreicht werden.

Der besondere Vorteil liegt hier darin, dass eine solche Baueinheit schon rein äusserlich von einer beobachteten Person nicht als unangenehm oder als Bedrohung empfunden wird, da keine transparenten, insbesondere glasklaren Optikteile einer Kamera erkennbar sind. Vielmehr erscheinen die Gehäuseteile der beobachtenden Person optisch weiss oder zumindest opak weiss oder auch opak farbig, wie z.B. grau, rot, blau opak etc..

Besonders vorteilhaft ist es auch, wenn die Gehäuseform der Baueinheit an die eines Brand- oder Rauchmelders bzw. eines als Punktmelder realisierten Gefahrenmelders angelehnt ist. Derartige bekannte Bauformen erwecken bei einem Betrachter keinerlei Argwohn. Vielmehr erwecken diese Bauformen beim Betrachter ein erhöhtes positives Sicherheitsgefühl, da offensichtlich der Aufenthaltsbereich des Betrachters auf Feuer und Rauch hin überwacht wird.

Die Aufgabe der Erfindung wird weiterhin durch ein System zur Bewertung der Sicherheitslage in einem Gebäude gelöst, wobei das Gebäude Aufenthaltsbereiche mit Zugangsberechtigung für berechtigte Personen aufweist. Das erfindungsgemässe System weist hierbei eine Mehrzahl von Kameras auf, die zur automatisierten Ermittlung einer jeweiligen (blossen) aktuellen Anzahl physisch anwesender Personen eingerichtet sind. Die Kameras sind im Decken- und/oder Wandbereich der Aufenthaltsbereiche verteilt angeordnet sind. Die Kameras können im optischen sichtbaren Bereich und/oder im Infrarotbereich sensitiv sein.

Das System umfasst zusätzlich eine Mehrzahl von RFID-Lesegeräten zum automatisierten Auslesen kontaktlos auslesbarer, bestimmungsgemäss von den jeweiligen berechtigten Personen mitgeführter RFID-Transponder. Die RFID-Lesegeräte sind im Decken- und/oder Wandbereich der Aufenthaltsbereiche verteilt angeordnet.

Die Kameras und die RFID-Lesegeräte müssen nicht notwendigerweise benachbart zueinander angeordnet sein oder eine Baueinheit bilden. Sie können prinzipiell unabhängig voneinander und auch über verschiedene Datenübertragungsmedien mit der Zentrale verbunden sein. Es versteht sich von selbst, dass es für die Bewertung des Sicherheitslage in einem Gebäude am Besten ist, wenn die jeweiligen Kameras und RFID-Lesegeräte möglichst nahe beieinander liegen, so dass der optische Erfassungsbereich einer Kamera und der Funkerfassungsbereich eines RFID-Lesegeräts in etwa beieinander liegen. Dadurch ist eine Differenz aus der Personenanzahl und der Identifikationskennungsanzahl zuverlässiger ermittelbar.

Das System weist schliesslich eine übergeordnete, signal- oder datentechnisch mit den Kameras und den RFID-Lesegeräten verbundene Zentrale auf. Letztere ist dazu eingerichtet, auf Basis der jeweiligen beiden empfangenen Anzahlen und/oder auf Basis einer von der Zentrale ermittelten aktuellen Gesamtpersonenanzahl und aktuellen Gesamtidentifikationskennungsanzahl einen Indikator zur Bewertung der aktuellen Sicherheitslage im Gebäude zu ermitteln und auszugeben. Die Zentrale kann z.B. ein Leitrechner oder ein PC sein, auf dem ein geeignetes Computerprogramm für die zuvor genannte Ermittlung ausgeführt wird. Vorzugsweise weist eine solche Zentrale einen Monitor zur Visualisierung der jeweiligen Anzahl zur möglichen Überwachung durch entsprechendes Personal auf.

Die Zentrale ist nach einer Ausführungsform dazu eingerichtet, als Indikator für die Sicherheitslage fortlaufend die Differenz zwischen den beiden Anzahlen und/oder zwischen den beiden Gesamtanzahlen zu ermitteln und gegebenenfalls eine Meldung auszugeben, wenn die jeweilige Differenz einen vorgegebenen Vergleichswert übersteigt. Wie eingangs beschrieben, kann die Differenz positive oder negative Werte annehmen.

Weiterhin kann die Zentrale dazu eingerichtet sein, eine weitere Meldung auszugeben, wenn die Anzahl der als ungültig erkannten Identifikationskennungen einen vorgegebenen weiteren Vergleichswert übersteigt.

Einer weiteren Ausführungsform zufolge kann die Zentrale dazu eingerichtet sein, einen jeweiligen Standort der physisch anwesenden Personen und/oder den jeweiligen Standort der ausgelesenen RFID-Transponder zu ermitteln und auszugeben. Dadurch ist im Fall von Unstimmigkeiten eine Nachverfolgung und gegebenenfalls eine Überprüfung der entsprechenden Aufenthaltsbereiche bzw. von Teilbereichen davon durch Sicherheitspersonal vor Ort möglich.

Schliesslich kann ein derartiges System eine Mehrzahl von erfindungsgemässen Baueinheiten aus jeweils einer Kamera und einem RFID-Lesegerät aufweisen. Die Zentrale ist datentechnisch mit der ersten und/oder zweiten Datenschnittstelle der jeweiligen Baueinheit verbunden.

Die Erfindung sowie vorteilhafte Ausführungen der vorliegenden Erfindung werden am Beispiel der nachfolgenden Figuren erläutert. Dabei zeigen:
- FIG 1: ein Ablaufdiagramm für das Prinzip des erfindungsgemässen Verfahrens,
- FIG 2: ein Beispiel für ein System mit einer Mehrzahl aus verteilt angeordneten Kameras und RFID-Lesegeräten, und mit einer übergeordneten Zentrale gemäss der Erfindung,
- FIG 3: ein weiteres Beispiel für ein System mit einer Mehrzahl erfindungsgemässer Baueinheiten jeweils aus einer Kamera und einem RFID-Lesegerät, und mit einer übergeordneten Zentrale gemäss der Erfindung,
- FIG 4: den Aufbau einer beispielhaften Baueinheit aus einer Infrarot-Kamera und einem RFID-Lesegerät in der Formgestaltung eines Brandmelders gemäss der Erfindung,
- FIG 5: eine perspektivische Darstellung einer erfindungsgemässen Baueinheit aus einer Infrarot-Kamera, einem RFID-Lesegerät und einer Detektionseinheit mit einem gemeinsamen Gehäuse in der Formgestaltung eines herkömmlichen Brandmelders, und
- FIG 6: ein Beispiel für ein Deckenverkleidungselement mit dahinter angeordneter Kamera und dahinter angeordnetem RFID-Lesegerät als Baueinheit gemäss der Erfindung.

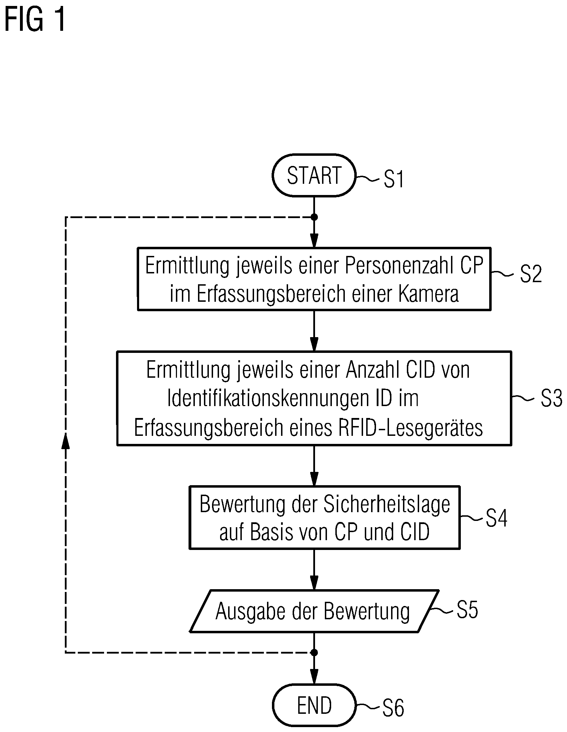

FIG 1 zeigt ein Ablaufdiagramm für das Prinzip des erfindungsgemässen Verfahrens.

Mit dem Bezugszeichen S1 ist ein Startschritt für die Bewertung der Sicherheitslage in einem Gebäude bezeichnet, wobei ein solches Gebäude Aufenthaltsbereiche mit Zugangsberechtigung für entsprechend berechtigte Personen aufweist.

Im Schritt S2 wird jeweils eine blosse aktuelle Anzahl CP physisch anwesender Personen in einem Erfassungsbereich der Kamera ermittelt.

Im Schritt S3 wird jeweils eine Anzahl CID von Identifikationskennungen ID im Erfassungsbereich des RFID-Lesegeräts ermittelt.

Im Schritt S4 wird dann auf Basis der beiden Anzahlen CP, CID ein Indikator zur Bewertung der aktuellen Sicherheitslage im Gebäude ermittelt.

Im Schritt S5 wird der ermittelte Indikator ausgegeben.

Mit S6 ist der Endschritt des erfindungsgemässen Verfahrens bezeichnet.

Ergänzend wird angemerkt, dass die Reihenfolge der beiden Verfahrensschritte S2, S3 auch umgekehrt sein kann. Die auf den zweiten Schritt S2 zurückgeführte, gestrichelt dargestellte Verzweigung soll verdeutlichen, dass die Schritte S2 bis S5 fortlaufend wiederholt werden können, um immer aktuell die Sicherheitslage bewerten zu können.

Die beiden Anzahlen CP, CIP können z.B. auf einem Bildschirm visualisiert werden oder übergeordnet von einer übergeordneten Zentrale zu jeweils einer Gesamtanzahl von physisch anwesenden Personen und zu einer Gesamtanzahl von empfangenen Identifikationskennungen ID aufsummiert werden.

Insbesondere ist die Zentrale Z dazu eingerichtet, als Indikator für die aktuelle Sicherheitslage fortlaufend die Differenz zwischen den beiden Anzahlen CP, CID zu ermitteln. Die Zentrale Z kann auch dazu eingerichtet sein, eine Meldung WARN auszugeben, wenn die Differenz einen vorgegebenen Vergleichswert, wie z.B. den Wert 0, übersteigt. Die Meldung WARN kann als Warnmeldung zum Beispiel auch auf ein Mobiltelefon eines Wachmanns übertragen werden. Sie kann auch eine weitere Meldung ausgeben, wenn die Anzahl der als ungültig erkannten Identifikationskennungen ID einen vorgegebenen weiteren Vergleichswert, wie z.B. den Wert 0, übersteigt. Weiterhin kann die Zentrale Z sowie die übergeordnete Zentrale dazu eingerichtet sein, den jeweiligen Standort der physisch anwesenden Personen P und/oder den jeweiligen Standort der ausgelesenen RFID-Transponder 4 bzw. Identifikationskennungen ID zu ermitteln und z.B. auf einem Flurplan des Gebäudes zu visualisieren.

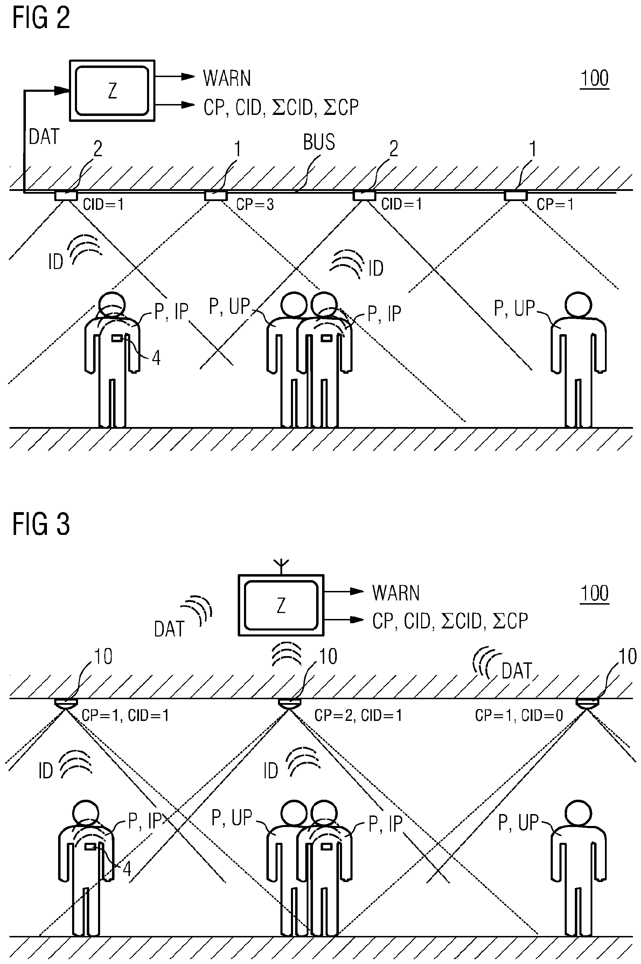

FIG 2 zeigt ein Beispiel für ein System mit einer Mehrzahl aus verteilt angeordneten Kameras 1 und RFID-Lesegeräten 2, und mit einer übergeordneten Zentrale Z gemäss der Erfindung.

Die Kameras 1 und RFID-Lesegeräte 2 sind beispielhaft abwechselnd und im gleichen Abstand im Deckenbereich eines Gebäudes 100 linienförmig verteilt angeordnet. Mit BUS ist ein Daten- oder Melderbus bezeichnet, welcher die Kameras 1 und RFID-Lesegeräte 2 datentechnisch an eine Zentrale Z anbindet. Mit IP sind ferner berechtigte Personen P bezeichnet, mit UP unberechtigte, d.h. unautorisierte Personen P ohne mitgeführten RFID-Transponder 4 bzw. ohne Ausweis mit einem solchen RFID-Transponder 4. Die Personen P halten sich im vorliegenden Beispiel auf einem Flur eines Gebäudes 100 auf.

Gemäss der Erfindung wird jeweils eine blosse aktuelle Anzahl CP physisch anwesender Personen P mittels Kameras 1 mit nachgeschalteter Bildverarbeitung automatisiert ermittelt wird. Es wird jeweils eine aktuelle Anzahl CID von Identifikationskennungen ID ermittelt, welche mittels RFID-Lesegeräten 2 von RFID-Transpondern 4 ausgelesen werden, wobei die Identifikationskennungen ID bestimmungsgemäss von berechtigten Personen IP mitgeführt werden. Es wird schliesslich auf Basis der jeweiligen beiden Anzahlen CP, CID ein Indikator zur Bewertung der aktuellen Sicherheitslage im Gebäude 100 ermittelt und ausgegeben.

Im Beispiel der vorliegenden FIG 2 erfasst die linke der beiden Kameras 1 drei physisch anwesende Person P. Der Kamera 1 überträgt über den Datenbus BUS diese Information CP=3 als Daten DAT an die Zentrale Z. Die rechte Kamera 1 ermittelt lediglich eine Personenzahl CP von 1. Das linke RFID-Lesegerät 2 liest einen sich im Funkerfassungsbereich des RFID-Lesegeräts 2 befindlichen RFID-Transponder 4 aus, die von einer hier berechtigten Person IP in Form eines Ausweises oder Badges mitgeführt wird. Das RFID-Lesegerät 2 überträgt die Identifikationskennungsanzahl CID mit dem Wert von 1 oder auch nur die ausgelesene Identifikationskennung ID als Daten DAT an die Zentrale Z. Das rechte RFID-Lesegerät 2 erfasst wiederum nur eine Identifikationskennung ID, obwohl dort zwei Personen P anwesend sind. Die übergeordnete Zentrale Z ermittelt auf Basis der empfangenen Daten DAT, also der empfangenen jeweiligen Anzahlen CP, CIP, einen Indikator für die Bewertung der Sicherheitslage im Gebäude 100. Im vorliegenden Beispiel wird auch eine Warnung WARN ausgegeben, weil sich eine rechnerische Differenz von 2 ergibt, da hier die Anzahl CP von physisch erfassten Personen P mittels der beiden Kameras 1 mit Wert von 4 um den Wert 2 grösser ist als die von den RFID-Lesegeräten 2 erfasste Identifikationskennungsanzahl CID mit dem Wert von 2. Mit anderen Worten müssen sich zwei nicht berechtigte Personen UP in diesem Aufenthaltsbereich mit Zugangsberechtigung aufhalten, die vermutlich keine Zugangsberechtigung hierfür haben. Die Differenz mit dem Wert von 2 ist somit der Indikator zur Bewertung der Sicherheitslage in diesem Gebäude 100.

Die Daten DAT können über z.B. mittels eines OFDM-Verfahrens (OFDM für Orthogonal Frequency-Division Multiplexing), mittels FM-Modulation-Verfahrens, mittels eines PSK-Verfahrens (PSK für Phase Shift Keying) zur Modulation digitaler Daten oder mittels eines differentiellen PSK-Verfahrens über den Datenbus BUS übertragen werden. Vorzugsweise erfolgt über einen solchen Melderbus BUS auch die gesamte elektrische Energieversorgung der angeschlossenen Geräte 1, 2.

FIG 3 zeigt ein weiteres Beispiel für ein System mit einer Mehrzahl erfindungsgemässer Baueinheiten 10 jeweils aus einer Kamera 1 und einem RFID-Lesegerät 2, und mit einer übergeordneten Zentrale Z gemäss der Erfindung. Die Baueinheiten 10 sind an die Formgestaltung bekannter Brand- oder Rauchmelder angelehnt. Sie stellen insbesondere Punktmelder dar.

Im Vergleich zur vorherigen FIG 2 erfolgt hier die Übertragung der Daten DAT von den jeweiligen Baueinheiten 10 an die Zentrale Z über Funk, wie z.B. über WLAN oder über einen anderen Funkstandard wie z.B. Bluetooth, DECT etc.

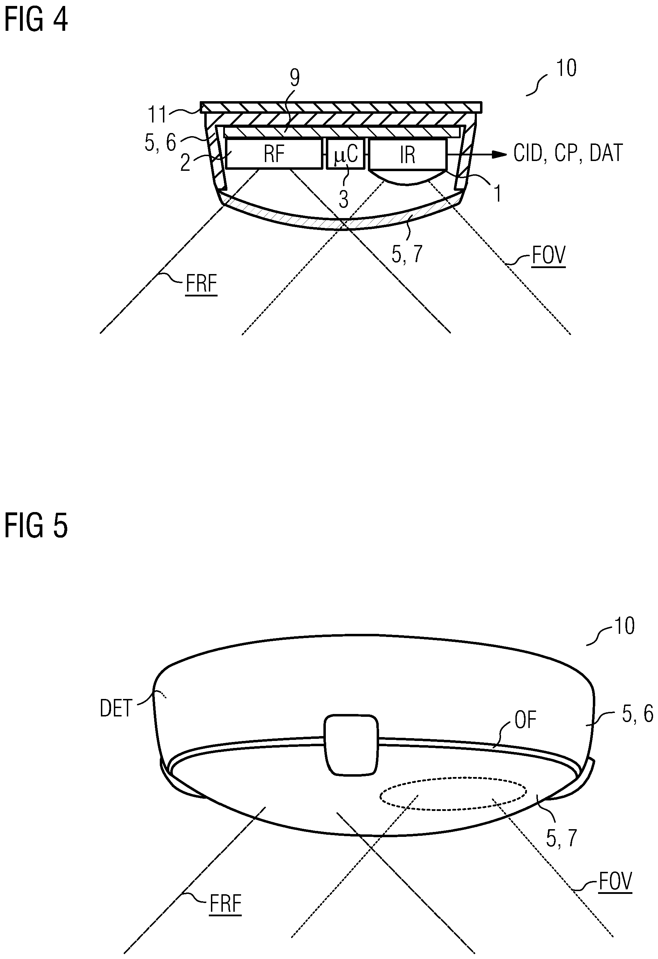

FIG 4 zeigt den Aufbau einer beispielhaften Baueinheit 10 aus einer Infrarot-Kamera 1 und einem RFID-Lesegerät 3 in der Formgestaltung eines Brandmelders gemäss der Erfindung. Die Infrarotkamera 1 weist vorzugsweise ein integriertes Thermopile-Array oder ein Mikrobolometer-Array als Wärmebildsensor auf. Weiterhin weist die Infrarotkamera 1 eine nicht weiter bezeichnete optische Linse auf, mittels welcher der exemplarisch eingezeichnete optische Erfassungsbereich FOV der Infrarotkamera 1 auf den Wärmebildsensor fokussiert wird. Die Infrarotkamera 1 ist zusammen mit einem als Modul ausgebildeten RFID-Lesegerät 2 und einer elektronischen Verarbeitungseinheit 3, wie z.B. einem Mikrocontroller, auf einem Schaltungsträger 9 der Baueinheit 10 angeordnet. Mit dem Bezugszeichen FRF ist ein Funkerfassungsbereich des RFID-Lesegeräts 2 bezeichnet, der - in einem gewissen Abstand betrachtet - in etwa mit dem optischen Erfassungsbereich FOV der Kamera 1 übereinstimmt.

Mit dem Bezugszeichen 7 ist ein Teil des Gehäuses 5 bezeichnet, das zumindest für Mikrowellen, insbesondere im Bereich um 2,45 GHz oder 5 GHz, und für Wärmestrahlen im Bereich von 7,5 µm bis 15 µm weitgehend durchlässig, das heisst "transparent", ist. Der Mikrowellenfrequenzbereich um 2,45 GHz und 5 GHz ist in einer Vielzahl von Staaten als gebührenfreies ISM-Frequenzband verfügbar. Vorzugsweise ist das RFID-Lesegerät 2 zum Sende-/Empfangsbetrieb in zumindest einem dieser ISM-Frequenzbänder eingerichtet.

Das Gehäuseteil 7 ist z.B. eine Abdeckung, das auf einen Grundkörper 6 des Gehäuses 5 aufgesteckt werden kann. Dieses Gehäuseteil 7 erscheint einer Person optisch weiss oder zumindest opak oder auch farbig opak. Solche Gehäuseteile 7 bzw. Gehäuseabdeckungen lassen sich z.B. aus Polyethylen herstellen, in welche UV-stabilisierte TiO₂- oder ZnO-Partikel eingebracht sind. Es sind auch andere geeignete Partikel bekannt, wie z.B. Industrie-Diamant. Die Dichte und die Grössenverteilung dieser Partikel werden nun so gewählt, dass sie das sichtbare Licht zurückstreuen, das Infrarotlicht jedoch grösstenteils passieren lassen. Mit "sichtbarem Licht" ist der für einen Menschen optisch wahrnehmbare Wellenlängenbereich von 380 bis 780 nm gemeint.

Alternativ oder zusätzlich kann zumindest ein Teil der Oberfläche des im Blickfeld der Infrarotkamera 1 liegenden Gehäuses 5 oder Gehäuseteils 7 eine derartige Strukturierung aufweisen, dass diese das sichtbare Licht zerstreut und das infrarote Licht zum Grossenteil passieren lässt. Die Strukturierung weist vorzugsweise Strukturbreiten im Bereich der Wellenlänge des Infrarotlichts auf, das heisst Strukturbreiten im Bereich von 7,5 µm bis 20 µm. Die Strukturen können z.B. Punktierungen oder Linien sein. Eine solche Strukturierung kann z.B. durch Ätzen, feinstes Bürsten oder Elektronenpolieren der Linsenoberfläche oder Gehäuseteiloberfläche erreicht werden.

Die vom RFID-Lesegeräte 2 erfassten Identifikationskennungen ID werden im Beispiel der FIG 4 an die elektronische Verarbeitungseinheit 3 zur weiteren Verarbeitung weitergeleitet. Die von der Infrarot-Kamera 1 ausgegebenen Bilddaten werden gleichfalls an die Verarbeitungseinheit 3 weitergeleitet. Auf Basis eines geeigneten Computerprogramms, welches auf der Verarbeitungseinheit 3 ausgeführt wird, können zudem aus den Bilddaten über geeignete bildverarbeitende Algorithmen die Anzahl CP der physisch erfassten Personen im Erfassungsbereich der Infrarot-Kamera 1 und/oder deren Bewegungsrichtung und/oder deren Bewegungsgeschwindigkeit ermittelt werden. Die dazu korrespondierenden Daten DAT können dann zusammen mit den erfassten Identifikationskennungen ID und/oder deren Anzahl CID an einer Schnittstelle der Baueinheit 10 ausgegeben werden. Die ausgegebenen Daten DAT, CP, CID können dann durch eine übergeordnete Zentrale Z zur übergeordneten Ermittlung einer Gesamtanzahl ΣCP von physischer erfassten Personen P und einer Gesamtidentifikationskennungsanzahl ΣCID weiterverarbeitet werden.

Durch Auswerten der von den jeweiligen Infrarot-Kameras 1 stammenden Daten zu Bewegungsrichtung und/oder zu Bewegungsgeschwindigkeit kann die Zentrale Z ausserdem das Fortschreiten von Personen P von einem Erfassungsbereich einer Kamera 1 in einen angrenzenden Erfassungsbereich einer anderen Kamera 1 ermitteln und somit diese Person nachverfolgen. Die Erfassungsbereiche der Kameras 1 müssen sich nicht notwendigerweise überlappen. Sie können auch in gewissen Masse voneinander beabstandet sein, wie z.B. im Bereich von 0,5 bis 10 m. Durch Auswerten der Bewegungsrichtung und Geschwindigkeit einer Person P kann dann die Zentrale Z über als bekannt vorgegebene Abstandwerte der Erfassungsbereiche zueinander, das Fortbewegen und das Ankommen einer Person in den jeweiligen benachbarten Erfassungsbereich hochgerechnet werden. Ein plötzliches Fehlen oder Hinzukommen von Personen kann in diesem Fall auch als Indikator für die Bewertung der Sicherheitslage im Gebäude ausgegeben werden, wenn das Fehlen oder Hinzukommen rechnerisch als nicht plausibel bewertet werden konnte.

FIG 5 zeigt eine perspektivische Darstellung einer erfindungsgemässen Baueinheit 10 aus einer Infrarot-Kamera 1, einem RFID-Lesegerät 2 und einer Detektionseinheit DET mit einem gemeinsamen Gehäuse 5 in der Formgestaltung eines herkömmlichen Brandmelders. In diesem Fall sind die Infrarot- bzw. Wärmebildkamera 1 und das RFID-Lesegerät 2 im Gehäuse 5 nebeneinander angeordnet.

Zusätzlich ist im Inneren des Gehäuses 4 eine separate Detektionseinheit DET zur Detektion von Brand-, Rauch- oder Brandgaspartikeln aufgenommen. Derartige Einheiten DET sind allgemein bekannt. Es kann sich hier um eine optische, um eine optoakustische Messkammer oder um eine Gasmesszelle handeln. Mit OF sind Öffnungen oder Schlitze im Gehäuse 5 bezeichnet, durch welche die zu detektierenden Brand-, Rauch- oder Brandgaspartikel in das Gehäuseinnere zu der Detektionseinheit DET gelangen können. Die Detektionseinheit DET ist signal- oder datentechnisch mit einer nicht weiter gezeigten elektronischen Verarbeitungseinheit verbunden, die dazu eingerichtet ist, einen Detektionswert und eine daraus abgeleitete Messgrösse als Mass für die Konzentration von detektierten Brand-, Rauch- oder Brandgaspartikeln zu ermitteln. Die zusätzlichen Daten für die Brand-, Rauch- oder Gasdetektion können zusammen mit den anderen Daten DAT, CP, CID ausgegeben werden. Die zusätzlichen Daten können z.B. auch durch eine datentechnisch damit verbundene Brandmeldezentrale ausgewertet werden. Letztere kann auch in der Zentrale Z mit integriert sein.

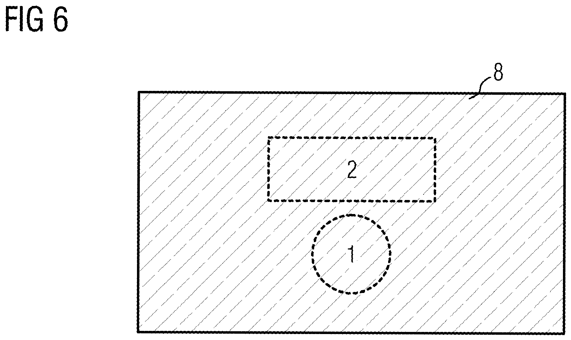

FIG 6 zeigt ein Beispiel für ein Deckenverkleidungselement 8 mit dahinter angeordneter Kamera 1 und dahinter angeordnetem RFID-Lesegerät 2 als Baueinheit gemäss der Erfindung. Das Deckenverkleidungselement 8 kann z.B. bereits mit der Kamera 1 und dem RFID-Lesegerät 2 vormontiert sein. Das Deckenverkleidungselement 8 kann z.B. ein modulares Panel sein. Es kann für den Fall, dass die Kamera 1 eine Infrarot- oder Wärmebildkamera ist, wieder aus einem Werkstoff gefertigt sein, welcher - analog zum Gehäuseteil 7 in FIG 4 - zumindest für Mikrowellen, insbesondere im Bereich um 2,45 GHz oder 5 GHz, und für Wärmestrahlen im Bereich von 7,5 µm bis 15 µm weitgehend durchlässig, das heisst "transparent", ist.

### Bezugszeichenliste

- 1: Kamera, Infrarot-Kamera, Wärmebildkamera
- 2: RFID-Lesegerät
- 3: elektronische Verarbeitungseinheit, Mikrocontroller
- 4: Ausweis mit RFID-Transponder, Badge
- 5: Gehäuse
- 6: Grundkörper
- 7: Gehäuseteil, Deckel, Abdeckung
- 8: Deckenverkleidungselement, Wandverkleidungselement
- 9: Schaltungsträger
- 10: Baueinheit aus Kamera und RFID-Lesegerät, Punktmelder
- 11: Sockel
- 100: Gebäude

- BUS: Informationsbus, Datenbus, Melderbus, Brandmelderbus
- CID: Anzahl der Identifikationskennungen
- CP: Personenanzahl
- DAT: Daten
- DET: Detektor, Rauchdetektor, Feuerdetektor, Gasdetektor
- FOV: Blickfeld, Field-of-View
- FRV: Funkerfassungsbereich
- ID: Identifikationskennung
- IP: berechtigte Person
- OF: Gehäuseöffnung
- P: Person
- S1-S6: Verfahrensschritte
- UP: Unberechtigte Person
- WARN: Warnmeldung
- Z: Zentrale, Zentrale mit Bildauswerteeinheit
- ECID: Gesamtidentifikationskennungsanzahl
- ΣCP: Gesamtpersonenanzahl

## Patentansprüche

1. Verfahren zur Bewertung der Sicherheitslage in einem Gebäude (100), wobei das Gebäude (100) Aufenthaltsbereiche mit Zugangsberechtigung für berechtigte Personen (IP) aufweist,
- wobei jeweils eine aktuelle Anzahl (CP) von in einem Aufenthaltsbereich physisch anwesender Personen (P) mittels Kameras (1) mit nachgeschalteter Bildverarbeitung automatisiert ermittelt wird, wobei die Kameras (1) im Decken- und/oder Wandbereich der Aufenthaltsbereiche verteilt angeordnet sind,
- wobei jeweils eine aktuelle Anzahl (CID) von Identifikationskennungen (ID) ermittelt wird, welche mittels RFID-Lesegeräten (2) von RFID-Transpondern (4) ausgelesen werden, wobei die Identifikationskennungen (ID) bestimmungsgemäss von berechtigten Personen (IP) mitgeführt werden und wobei die RFID-Lesegeräte (2) im Decken- und/oder Wandbereich der Aufenthaltsbereiche verteilt angeordnet sind, und
- wobei auf Basis der jeweiligen beiden Anzahlen (CP, CID) ein Indikator zur Bewertung der aktuellen Sicherheitslage im Gebäude (100) ermittelt und ausgegeben wird, und
wobei als Kamera (1) eine Infrarot-Kamera, insbesondere eine Wärmebildkamera, verwendet wird.

2. Verfahren nach Anspruch 1, wobei übergeordnet eine aktuelle Gesamtpersonenanzahl (ΣCP) und eine aktuelle Gesamtidentifikationskennungsanzahl (ΣCID) ermittelt wird.

3. Verfahren nach Anspruch 1 oder 2, wobei als Indikator für die Sicherheitslage fortlaufend die Differenz zwischen den beiden Anzahlen (CP, CID) und/oder zwischen den beiden Gesamtanzahlen (ΣCP, ΣCID) ermittelt wird und wobei gegebenenfalls eine Meldung (WARN) ausgegeben wird, wenn die jeweilige Differenz einen vorgegebenen Vergleichswert übersteigt.

4. Verfahren nach Anspruch 3, wobei eine weitere Meldung ausgegeben wird, wenn die Anzahl der als ungültig erkannten Identifikationskennungen (ID) einen vorgegebenen weiteren Vergleichswert übersteigt.

5. Verfahren nach einem der vorherigen Ansprüche, wobei der jeweilige Standort der physisch anwesenden Personen (P) und/oder der jeweilige Standort der ausgelesenen RFID-Transponder (4) ermittelt und ausgegeben wird.

6. Verfahren nach einem der vorherigen Ansprüche, wobei als Infrarot-Kamera ein Thermopile-Array oder ein Mikrobolometer-Array verwendet wird.

7. Verfahren nach einem der vorherigen Ansprüche, wobei der Wärmedetektionsbereich der Infrarot-Kamera im Bereich von etwa 7,5 µm bis 15 µm liegt.

8. Anwendung des Verfahrens nach einem der vorherigen Ansprüche zum Detektieren und Lokalisieren von Personen (P) mit fehlender, nicht auslesbarer oder ungültiger Identifikationskennung (ID).

9. Baueinheit aus einer Infrarot-Kamera (1), insbesondere Wärmebildkamera, und aus einem RFID-Lesegerät (2),
- wobei die Infrarot-Kamera (1) und das RFID-Lesegerät (2) in einem gemeinsamen Gehäuse (5) aufgenommen sind,
- wobei die Infrarot-Kamera (1) zur automatisierten Ermittlung und Ausgabe einer aktuellen Anzahl (CP) von in einem Aufenthaltsbereich physisch anwesender Personen (P) in einem optischen Erfassungsbereich (FOV) der Infrarot-Kamera (1) und/oder zur Erfassung und Ausgabe entsprechender Bilddaten (DAT) an einer ersten Datenschnittstelle der Baueinheit (10) eingerichtet ist, und
- wobei das RFID-Lesegerät (2) zum Auslesen von Identifikationskennungen (ID) aus RFID-Transpondern (4) und/oder zum Bestimmen einer aktuellen Anzahl (CID) von erfassten Identifikationskennungen (ID) in einem Funkerfassungsbereich (FRF) des RFID-Lesegeräts (2) und zur Ausgabe der erfassten Identifikationskennungen (ID) und/oder der aktuellen Anzahl (CID) der Identifikationskennungen (ID) an einer zweiten Datenschnittstelle der Baueinheit (10) eingerichtet ist.

10. Baueinheit nach Anspruch 9, wobei als Infrarot-Kamera ein Thermopile-Array oder ein Mikrobolometer-Array verwendet wird.

11. Baueinheit nach Anspruch 9 oder 10, wobei zumindest ein Teil (7) des im Blickfeld der Infrarot-Kamera (1) liegenden Gehäuses (5) oder ein als optische Linse ausgebildetes Gehäuseteil (7) derart beschaffen ist, dass dieses im Infrarotbereich zumindest weitgehend transparent und im optisch sichtbaren Bereich undurchsichtig, insbesondere opak ist.

12. System zur Bewertung der Sicherheitslage in einem Gebäude (100), wobei das Gebäude (100) Aufenthaltsbereiche mit Zugangsberechtigung für berechtigte Personen (IP) aufweist,
- wobei das System eine Mehrzahl von Infrarot-Kameras (1), insbesondere Wärmebildkameras, eingerichtet zur automatisierte Ermittlung einer jeweiligen blossen aktuellen Anzahl (CP) von in einem Aufenthaltsbereich physisch anwesender Personen (P) aufweist, wobei die Infrarot-Kameras (1) im Decken- und/oder Wandbereich der Aufenthaltsbereiche verteilt angeordnet sind,
- wobei das System eine Mehrzahl von RFID-Lesegeräten (2) zum automatisierten Auslesen kontaktlos auslesbarer, bestimmungsgemäss von den jeweiligen berechtigten Personen (IP) mitgeführter RFID-Transponder (4) aufweist, wobei die RFID-Lesegeräte (2) im Decken- und/oder Wandbereich der Aufenthaltsbereiche verteilt angeordnet sind,
- wobei das System eine übergeordnete, signal- oder datentechnisch mit den Infrarot-Kameras (1) und den RFID-Lesegeräten (2) verbundene Zentrale (Z) aufweist, und
- wobei die Zentrale (Z) dazu eingerichtet ist, auf Basis der jeweiligen beiden empfangenen Anzahlen (CP, CID) und/oder auf Basis einer von der Zentrale (Z) ermittelten aktuellen Gesamtpersonenanzahl (ΣCP) und aktuellen Gesamtidentifikationskennungsanzahl (ΣCID) einen Indikator zur Bewertung der aktuellen Sicherheitslage im Gebäude (100) zu ermitteln und auszugeben.

13. System nach Anspruch 12, wobei die Zentrale (Z) dazu eingerichtet ist, als Indikator für die Sicherheitslage fortlaufend die Differenz zwischen den beiden Anzahlen (CP, CID) und/oder zwischen den beiden Gesamtanzahlen (ΣCP, ΣCID) zu ermitteln und gegebenenfalls eine Meldung (WARN) auszugeben, wenn die jeweilige Differenz einen vorgegebenen Vergleichswert übersteigt.

14. System nach Anspruch 13, wobei die Zentrale (Z) dazu eingerichtet ist, eine weitere Meldung auszugeben, wenn die Anzahl der als ungültig erkannten Identifikationskennungen (ID) einen vorgegebenen weiteren Vergleichswert übersteigt.

15. System nach einem der Ansprüche 12 bis 14, wobei die Zentrale (Z) dazu eingerichtet ist, einen jeweiligen Standort der physisch anwesenden Personen (P) und/oder den jeweiligen Standort der ausgelesenen RFID-Transponder (4) zu ermitteln und auszugeben.

16. System nach einem der Ansprüche 12 bis 15, wobei das System eine Mehrzahl von Baueinheiten (10) aus jeweils einer Infrarot-Kamera (1) und einem RFID-Lesegerät (2) nach einem der Ansprüche 9 bis 11 aufweist und wobei die Zentrale (Z) datentechnisch mit der ersten und/oder zweiten Datenschnittstelle der jeweiligen Baueinheit (10) verbunden ist.

## Claims

1. Method for evaluating the security situation in a building (100), wherein the building (100) has common areas with access authorisation for authorised persons (IP),
- wherein in each case a current number (CP) of persons (P) physically present in the common area is determined automatically by means of cameras (1) with image processing that is activated downstream, wherein the cameras (1) are arranged in a distributed manner in the ceiling and/or wall region of the common areas,
- wherein in each case a current number (CID) of identifiers (ID), which are read by RFID readers (2) of RFID transponders (4), is determined, wherein the identifiers (ID) are carried by authorised persons (IP) in compliance with regulations and wherein the RFID readers (2) are arranged in a distributed manner in the ceiling and/or wall region of the common areas, and
- wherein an indicator for evaluating the current security situation in the building (100) is determined and output on the basis of each of the two numbers (CP, CID), and
- wherein an infrared camera, in particular a thermal imaging camera, is used as the camera (1).

2. Method according to claim 1, wherein at a higher level a current total number of persons (ΣCP) and a current total number of identifiers (ΣCID) is determined.

3. Method according to claim 1 or 2, wherein as an indicator of the security situation the difference between the two numbers (CP, CID) and/or between the two total numbers (ΣCP, ΣCID) is continuously determined and wherein if appropriate a message (WARN) is output if the respective difference exceeds a predetermined reference value.

4. Method according to claim 3, wherein a further message is output if the number of identifiers (ID) recognised as invalid exceeds a predetermined further reference value.

5. Method according to one of the preceding claims, wherein the respective location of the persons (P) physically present and/or the respective location of the read-out RFID transponders (4) is determined and output.

6. Method according to one of the preceding claims, wherein a thermopile array or a microbolometer array is used as the infrared camera.

7. Method according to one of the preceding claims, wherein the thermal detection range of the infrared camera lies in the range between approximately 7.5 µm and 15 µm.

8. Use of the method according to one of the preceding claims for detecting and locating persons (P) with a missing, unreadable or invalid identifier (ID).

9. Subassembly comprising an infrared camera (1), in particular a thermal imaging camera, and an RFID reader (2),
- wherein the infrared camera (1) and the RFID reader (2) are accommodated in a common housing (5),
- wherein the infrared camera (1) is set up for the automatic determination and output of a current number (CP) of persons (P) physically present in a common area in an optical coverage area (FOV) of the infrared camera (1) and/or for recording and outputting corresponding image data (DAT) at a first data interface of the subassembly (10), and
- wherein the RFID reader (2) is set up to read identifiers (ID) from RFID transponders (4) and/or for determining a current number (CID) of detected identifiers (ID) in a radio detection area (FRF) of the RFID reader (2) and for outputting the detected identifiers (ID) and/or the current number (CID) of the identifiers (ID) at a second data interface of the subassembly (10).

10. Subassembly according to claim 9, wherein a thermopile array or a microbolometer array is used as the infrared camera.

11. Subassembly according to claim 9 or 10, wherein at least one part (7) of the housing (5) lying in the field of view of the infrared camera (1) or a housing part (7) formed as an optical lens (7) is conditioned such that it is at least largely transparent in the infrared range and is non-transparent, in particular opaque, in the optically visible range.

12. System for evaluating the security situation in a building (100), wherein the building (100) has common areas with access authorisation for authorised persons (IP),
- wherein the system has a plurality of infrared cameras (1), in particular thermal imaging cameras, set up for the automatic determination of a respective sheer current number (CP) of persons (P) physically present in a common area, wherein the infrared cameras (1) are arranged in a distributed manner in the ceiling and/or wall region of the common areas,
- wherein the system has a plurality of RFID readers (2) for the automatic reading of contactlessly readable RFID transponders (4) carried by the respective authorised persons (IP) in compliance with regulations, wherein the RFID readers (2) are arranged in a distributed manner in the ceiling and/or wall region of the common areas,
- wherein the system has a higher-level control centre (Z) which is connected by signal or data technology to the infrared cameras (1) and the RFID readers (2), and
- wherein the control centre (Z) is set up, on the basis of the respective two numbers (CP, CID) received and/or on the basis of a current total number of persons (ΣCP) and total number of identifiers (ΣCID) determined, to determine and output an indicator for evaluating the current security situation in the building (100).

13. System according to claim 12, wherein the control centre (Z) is set up to continuously determine, as an indicator of the security situation, the difference between the two numbers (CP, CID) and/or between the two total numbers (ΣCP, ΣCID) and if appropriate to output a message (WARN) if the respective difference exceeds a predetermined reference value.

14. System according to claim 13, wherein the control centre (Z) is set up to output a further message if the number of identifiers (ID) recognised as invalid exceeds a predetermined further reference value.

15. System according to one of claims 12 to 14, wherein the control centre (Z) is set up to determine and output a respective location of the persons (P) physically present and/or the respective location of the read-out RFID transponders (4).

16. System according to one of claims 12 to 15, wherein the system has a plurality of subassemblies (10), each comprising an infrared camera (1) and an RFID reader (2) according to one of claims 9 to 11 and wherein the control centre (Z) is connected in terms of data technology to the first and/or second data interface of the respective subassembly (10).

## Revendications

1. Procédé d'évaluation de la situation en matière de sécurité dans un bâtiment (100), le bâtiment (100) comprenant des zones de séjour avec droit d'accès pour personnes autorisées (IP),
- un nombre actuel respectif (CP) de personnes (P) présentes physiquement dans une zone de séjour étant déterminé automatiquement au moyen de caméras (1) avec traitement d'images en aval, les caméras (1) étant agencées de manière répartie dans la zone de plafond et/ou de mur des zones de séjour,
- un nombre actuel (CID) d'identifiants (ID) étant déterminé, lesquels sont lus au moyen de lecteurs RFID (2) de transpondeurs RFID (4),
- les identifiants (ID) étant emportés par des personnes autorisées (IP) conformément à l'usage prévu et les lecteurs RFID (2) étant agencés de manière répartie dans la zone de plafond et/ou de mur des zones de séjour et
- un indicateur d'évaluation de la situation en matière de sécurité dans le bâtiment (100) étant déterminé et émis sur la base des deux nombres respectifs (CP, CID) et une caméra infrarouge, et plus particulièrement une caméra thermique, étant utilisée en tant que caméra (1).

2. Procédé selon la revendication 1, un nombre total actuel de personnes (ΣCP) et un nombre total actuel d'identifiants (ΣCID) étant déterminés prioritairement.

3. Procédé selon la revendication 1 ou 2, la différence entre les deux nombres (CP, CID) et/ou entre les deux nombres totaux (ΣCP, ΣCID) étant déterminée continuellement en tant qu'indicateur de la situation en matière de sécurité et, le cas échéant, un message (WARN) étant émis lorsque la différence respective dépasse une valeur de comparaison donnée.

4. Procédé selon la revendication 3, un autre message étant émis lorsque le nombre d'identifiants (ID) reconnus non valables dépasse une autre valeur de comparaison donnée.

5. Procédé selon l'une des revendications précédentes, la localisation respective des personnes (P) présentes physiquement et/ou la localisation respective des transpondeurs RFID lus (4) étant déterminées et émises.

6. Procédé selon l'une des revendications précédentes, un réseau de thermopiles ou un réseau de microbolomètres étant utilisé en tant que caméra infrarouge.

7. Procédé selon l'une des revendications précédentes, la zone de détection thermique de la caméra infrarouge étant de l'ordre d'environ 7,5 µm à 15 µm.

8. Application du procédé selon l'une des revendications précédentes pour la détection et localisation de personnes (P) sans identifiant (ID) ou avec un identifiant (ID) non lisible ou non valable.

9. Unité modulaire composée d'une caméra infrarouge (1), et plus particulièrement d'une caméra thermique, et d'un lecteur RFID (2),
- la caméra infrarouge (1) et le lecteur RFID (2) étant logés dans un boîtier commun (5),
- la caméra infrarouge (1) étant conçue pour déterminer et émettre de manière automatisée un nombre actuel (CP) de personnes (P) physiquement présentes dans une zone de séjour dans une zone de détection optique (FOV) de la caméra infrarouge (1) et/ou pour détecter et émettre des données de type image correspondantes (DAT) au niveau d'une première interface de données de l'unité modulaire (10) et
- le lecteur RFID (2) étant conçu pour lire des identifiants (ID) extraits de transpondeurs RFID (4) et/ou pour déterminer un nombre actuel (CID) d'identifiants détectés (ID) dans une zone de détection radio (FRF) du lecteur RFID (2) et pour émettre les identifiants détectés (ID) et/ou le nombre actuel (CID) des identifiants (ID) au niveau d'une deuxième interface de données de l'unité modulaire (10).

10. Unité modulaire selon la revendication 9, un réseau de thermopiles ou un réseau de microbolomètres étant utilisé en tant que caméra infrarouge.

11. Unité modulaire selon la revendication 9 ou 10, au moins une partie (7) du boîtier (5) situé dans le champ de vision de la caméra infrarouge (1) ou une partie de boîtier (7) réalisée en tant que lentille optique étant réalisées de manière telle que cette partie est au moins largement transparente dans la plage infrarouge et non transparente, et plus particulièrement opaque, dans la plage visible optiquement.

12. Système d'évaluation de la situation en matière de sécurité dans un bâtiment (100), le bâtiment (100) comportant des zones de séjour avec droit d'accès pour personnes autorisées (IP),
- le système comportant une pluralité de caméras infrarouges (1), et plus particulièrement de caméras thermiques, conçues pour la détermination automatisée d'un simple nombre actuel respectif (CP) de personnes (P) physiquement présentes dans une zone de séjour, les caméras infrarouges (1) étant agencées de manière répartie dans la zone de plafond et/ou de mur des zones de séjour,
- le système comportant une pluralité de lecteurs RFID (2) pour la lecture automatisée de transpondeurs RFID (4) lisibles à distance et emportés par les personnes autorisées respectives (IP) conformément à l'usage prévu, les lecteurs RFID (2) étant agencés de manière répartie dans la zone de plafond et/ou de mur des zones de séjour,
- le système comportant une centrale (Z) générale reliée en termes de signaux ou de données aux caméras infrarouges (1) et aux lecteurs RFID (2) et
- la centrale (Z) étant conçue pour déterminer et émettre, sur la base des deux nombres reçus respectifs (CP, CID) et/ou sur la base d'un nombre total actuel de personnes (ΣCP) et d'un nombre total actuel d'identifiants (ΣCID), nombres déterminés par la centrale (Z), un indicateur d'évaluation de la situation actuelle en matière de sécurité dans le bâtiment (100).

13. Système selon la revendication 12, la centrale (Z) étant conçue pour déterminer continuellement la différence entre les deux nombres (CP, CID) et/ou entre les deux nombres totaux (ΣCP, ΣCID) en tant qu'indicateur de la situation en matière de sécurité et pour émettre, le cas échéant, un message (WARN) lorsque la différence respective dépasse une valeur de comparaison donnée.

14. Système selon la revendication 13, la centrale (Z) étant conçue pour émettre un autre message lorsque le nombre d'identifiants (ID) reconnus non valables dépasse une autre valeur de comparaison donnée.

15. Système selon l'une des revendications 12 à 14, la centrale (Z) étant conçue pour déterminer et émettre une localisation respective des personnes (P) présentes physiquement et/ou la localisation respective des transpondeurs RFID lus (4).

16. Système selon l'une des revendications 12 à 15, le système comportant une pluralité d'unités modulaires (10) composées respectivement d'une caméra infrarouge (1) et d'un lecteur RFID (2) selon l'une des revendications 9 à 11 et la centrale (Z) étant reliée, en termes de technique des données, à la première et/ou à la deuxième interface de données de l'unité modulaire respective (10).
